# EUROPÄISCHE PATENTSCHRIFT

(11) **EP 3 875 338 B1**
(45) Veröffentlichungstag und Bekanntmachung des Hinweises auf die Patenterteilung: **08.05.2024**
(21) Anmeldenummer: 21160018.4
(22) Anmeldetag: 01.03.2021
(51) Int. Cl.: B61D 19/02, B61D 23/00, B61D 37/00, B60N 3/02

(54) **TÜRVORRICHTUNG FÜR EINEN WAGENKASTEN EINES PERSONENTRANSPORTFAHRZEUGS UND PERSONENTRANSPORTFAHRZEUG**
DOOR DEVICE FOR A CAR BODY OF A PASSENGER TRANSPORT VEHICLE AND PASSENGER TRANSPORT VEHICLE
DISPOSITIF DE PORTE POUR UNE CARROSSERIE DE VOITURE D'UN VÉHICULE DE TRANSPORT DE PERSONNES ET VÉHICULE DE TRANSPORT DE PERSONNES

(30) Priorität: 02.03.2020 DE 102020105575
(43) Veröffentlichungstag der Anmeldung: 08.09.2021
(73) Patentinhaber: ALSTOM Holdings, 93400 Saint-Ouen-sur-Seine (FR)
(72) Erfinder: Büttner, Florian, 13156 Berlin (DE); Eichhorn, Christian, 16567 Mühlenbeck (DE); Rücker, Felix, 01067 Dresden (DE)
(74) Vertreter: Zimmermann & Partner Patentanwälte mbB

(56) Entgegenhaltungen:
- EP-B1- 2 812 223
- JP-A- 2019 094 020
- JP-B2- 6 219 689
- JP-B2- 6 289 051
- US-A- 1 268 209

## Beschreibung

### Technisches Gebiet

Die vorliegende Erfindung betrifft eine Türvorrichtung für einen Wagenkasten eines Personentransportfahrzeugs, insbesondere eines Schienenfahrzeugs oder Busses. Weiterhin betrifft die Erfindung ein Personentransportfahrzeug des öffentlichen Personenverkehrs mit einer solchen Schiebetrittvorrichtung.

### Vorbekannter Stand der Technik

Es ist bekannt, dass Personentransportfahrzeuge zum Transport von Personen für gewöhnlich Schiebe-, Falt- und/oder Klapptüren aufweisen, durch welche Fahrgäste in das Fahrzeug ein- und aussteigen können.

Der Zugang in einen Innenraum eines solchen Personentransportfahrzeugs erfolgt meist im Bereich eines Höhenniveaus einer Türschwelle einer Türvorrichtung des Fahrzeugs, vorzugsweise über einen ebenso erhöhten Bahnsteig oder mithilfe einer Treppenvorrichtung. Ist eine solche Vorrichtung nicht vorhanden, beispielsweise wenn ein als Schienenfahrzeug ausgebildetes Personentransportfahrzeug auf einem Gleis ohne Bahnsteig abgestellt ist, so muss bisher beispielsweise eine externe Leiter oder mobile Treppe bereitgestellt werden. So ist es dann möglich, einem Fahrzeugführer auch von einem Bodenniveau eines Umgebungsbodens des Personentransportfahrzeugs - im Falle von Schienenfahrzeugen von einem Niveau unterhalb einer Schienenoberkante - einen Zugang in das Personentransportfahrzeug zu ermöglichen.

Die US-Offenlegungsschrift US 2018 0327002 A1 beschreibt einen Güterwaggon mit seitlichen Zugangsleitern, über die Personal auf die Plattformen solcher Güterwaggons klettern kann. Die dabei beschriebenen Leitervorrichtungen sind mit ausfahrbaren Handläufen versehen. Die japanische Druckschrift JP 6 219689 B2 offenbart im Innenraum eines Schienenfahrzeugs angebrachte Haltevorrichtungen, die Passagieren im Türbereich von innen sowie von außen Halt bieten. Die US-Offenlegungsschrift US 1 268 209 A beschreibt Handgriffe in Personentransportfahrzeugen, die automatisch mit dem Öffnen der Türen ausgefahren und mit dem Schließen eingefahren werden.

### Nachteile des Stands der Technik

Derartige Türvorrichtungen des Stands der Technik bedingen hinsichtlich der Gestaltungsfreiheit von gattungsgemäßen Fahrzeugen unerwünschte Wirkungen. Insbesondere stellt es sich als nachteilig dar, dass die Lösungen wartungsanfällig und kompliziert hinsichtlich ihres strukturellen Aufbaus sind.

### Problemstellung

Eine Aufgabe der vorliegenden Erfindung ist es daher, eine Türvorrichtung für einen Wagenkasten eines Personentransportfahrzeugs bereitzustellen, welche einen einfachen und robusten Aufbau aufweist, gleichzeitig eine Verbesserung der konstruktiven Möglichkeiten bei einer Konzeption eines Fahrzeugs mit sich bringt, und zusätzlich die Ergonomie des Personentransportfahrzeugs unterstützt.

### Erfindungsgemäße Lösung

Die obige Aufgabe wird durch eine Türvorrichtung nach Anspruch 1 und durch ein Personentransportfahrzeug des öffentlichen Personenverkehrs, insbesondere Schienenfahrzeug, nach Anspruch 13 gelöst.

Personentransportfahrzeuge des öffentlichen Personenverkehrs sind Transportmittel, die geeignet sind, eine große Anzahl von Fahrgästen gemäß ihres Wunsches von einem Ort zu einen anderen Ort zu transportieren. Nutzfahrzeuge oder Spezialfahrzeuge, zum Beispiel Gefangenentransporter, gelten im Sinne der vorliegenden Offenbarung nicht als Personentransportfahrzeug.

Die offenbarte Türvorrichtung für einen Wagenkasten eines Personentransportfahrzeugs weist eine in einer Türebene verlaufende Türöffnung mit einer Türweite auf, die in Horizontalrichtung von einem ersten Türsäulenbereich und einem zweiten Türsäulenbereich, und in Vertikalrichtung von einer Türschwelle und insbesondere von einem Türstock begrenzt ist. Die Türsäulenbereiche, der Türstock und/oder die Türschwelle können die Funktion eines Türrahmens darstellen, wobei ein solcher Türrahmen weder durchgehend noch tatsächlich strukturell vorgesehen sein muss.

Insbesondere beschreibt der Begriff "Türsäulenbereich" einen körperlichen Abschnitt eines Seitenbereichs der Türvorrichtung, welcher sich zumindest teilweise in Vertikalrichtung erstreckt. Der Türsäulenbereich und/oder der Seitenbereich kann/können dabei Bestandteil eines Türbereichs des Wagenkastens sein. Weiterhin kann sich der Türsäulenbereich unmittelbar an einen teilweise in Vertikalrichtung verlaufenden Teil, zum Beispiel an eine Türsäule des Türrahmens der Türöffnung anschließen oder gegebenenfalls einen solchen Türrahmen teilweise bilden. Insbesondere ist ein Türsäulenbereich bezüglich einer Türsäule oder bezüglich der Türöffnung fest angeordnet vorgesehen.

Eine Türsäule kann dabei zum einen gegenständlich als Struktureinheit des Wagenkastens verstanden werden. Zum anderen ist auch denkbar, dass eine Türsäule integral mit weiteren Komponenten des Wagenkastens, und insbesondere nicht als selbstständiger Gegenstand ausgebildet ist. Auch kann der Türsäulenbereich von einer Innenwand, einer Innenverkleidung, einem Wandelement oder einer entsprechenden Struktur des Wagenkastens in einem Zugangsbereich des Wagenbereichs gebildet sein.

Die nummerierende Bezeichnung eines "ersten" und eines "zweiten" Türsäulenbereichs dient primär nicht dazu, eine quantitative Angabe über die Türsäulenbereich zu machen, sondern die Türsäulenbereiche, je nach Betrachtungsweise den linken Türsäulenbereich und den rechten Türsäulenbereich, voneinander differenzieren zu können.

Die im Kontext dieser Offenbarung gemachten Angaben zu einer Längsrichtung, Vertikalrichtung, Öffnungsrichtung, Querrichtung und/oder Horizontalrichtung beziehen sich auf einen bestimmungsgemäßen Einsatz der Türvorrichtung in dem Personentransportfahrzeug. Die Längsrichtung ist dabei im Wesentlichen gleich einer Längsrichtung eines Wagenkastens des Personentransportfahrzeugs, oder auch einer Fahrtrichtung bei Geradeausfahrt. Die Querrichtung bestimmt sich bezüglich der Gestalt des Wagenkastens des Personentransportfahrzeugs und kann somit senkrecht zu einer möglichen Fahrtrichtung bei Geradeausfahrt des Personentransportfahrzeugs ausgerichtet sein. Insbesondere kann im vorliegenden Fall die Öffnungsrichtung von Türblättern der Türvorrichtung gleich der Längsrichtung sein, insbesondere wenn die Türvorrichtung seitlich im Personentransportfahrzeug angeordnet ist. Die Vertikalrichtung ist ebenfalls bezüglich des bestimmungsgemäßen Einsatzes des Personentransportfahrzeugs auf einer horizontalen Fläche zu verstehen. Die Vertikalrichtung verläuft senkrecht zu einer Horizontalrichtung, zur Querrichtung und/oder zur Längsrichtung.

Neben der Türöffnung weist die Türvorrichtung eine erste Haltevorrichtung und eine zweite Haltevorrichtung auf, welche dazu dienen, einer Person eine physische Griffmöglichkeit zum Festhalten zur Verfügung zu stellen. Die erste Haltevorrichtung, ausgestattet mit einem ersten Halteabschnitt, ist an oder in dem ersten Türsäulenbereich, und die zweite Haltevorrichtung aufweisend einen zweiten Halteabschnitt ist an oder in dem zweiten Türsäulenbereich abgestützt und befestigt.

Der erste Halteabschnitt der ersten Haltevorrichtung ist dabei bewegbar an dem ersten Türsäulenbereich befestigt, sodass der erste Halteabschnitt eine Stauposition und eine Arbeitsposition einnehmen kann.

Gemäß einer alternativen oder zusätzlichen Ausführungsform kann auch die zweite Haltevorrichtung gemäß der ersten Haltevorrichtung ausgeführt sein, sodass beide Haltevorrichtungen in eine Arbeitsposition und Stauposition gebracht werden können. Weiterhin können somit alle Offenbarungsinhalte die im Zusammenhang mit der ersten Haltevorrichtung beschrieben werden auch auf die zweite Haltevorrichtung - sofern technisch sinnvoll - angewendet werden.

In der Stauposition befindet sich der erste Halteabschnitt in dem, an oder in unmittelbarer Nähe des ersten Türsäulenbereichs, sodass die Türöffnung, zumindest im Wesentlichen, nicht von dem ersten Halteabschnitt und/oder einer Komponente der ersten Haltevorrichtung obstruiert ist. Dies schließt nicht aus, dass sich die erste Haltevorrichtung in der Stauposition an einem Rand der Türöffnung befindet.

Befindet sich der erste Halteabschnitt und/oder eine Komponente der ersten Haltevorrichtung in der Betriebsposition, so ragt zumindest der erste Halteabschnitt von einem Rand der Türöffnung in die Türöffnung hinein, vorzugsweise zumindest teilweise in einer Horizontalrichtung, besonders bevorzugt parallel zu einer oder in einer Türebene der Türöffnung.

Gemäß einer Ausführungsform weist die erste Haltevorrichtung neben dem ersten Halteabschnitt einen Stützabschnitt und einen am Stützabschnitt vorgesehenen Befestigungsabschnitt auf. Dabei ist der Stützabschnitt im Zusammenspiel mit einem Lagerabschnitt des ersten Türsäulenbereichs und dem ersten Halteabschnitt so konfiguriert, dass der erste Halteabschnitt über den Stützabschnitt am Lagerabschnitt flexibel befestigt ist, sodass der erste Haltebereich die Stauposition und alternativ dazu die Betriebsposition einnehmen kann. Beispielsweise kann der Stützabschnitt derart erstreckbar in Horizontalrichtung ausgebildet sein, insbesondere sodass ein Hereinragen des ersten Halteabschnitts in die Türöffnung in Horizontalrichtung durch eine Erstreckung des Stützabschnitts in Horizontalrichtung, bevorzugt in oder parallel zur Türöffnungsebene, erfolgt.

Gemäß einer Ausgestaltung ist der erste Halteabschnitt in der Arbeitsposition zumindest teilweise in Vertikalrichtung ausgerichtet, sodass ein Festhalten einer Person an in Vertikalrichtung unterschiedlichen Bereichen des ersten Halteabschnitts ermöglicht wird. Beispielsweise kann der erste Halteabschnitt als eine zumindest teilweise in Vertikalrichtung verlaufende Haltestange ausgebildet sein.

Zwischen dem ersten Halteabschnitt und dem zweiten Halteabschnitt bildet sich in Horizontalrichtung ein Halteabstand aus, welcher in seiner Größe je nach Position des ersten Halteabschnitts variiert. Die Anordnung des ersten Halteabschnitts über den Stützabschnitt und Befestigungsabschnitt an dem Lagerabschnitt des Türsäulenbereichs ist so gestaltet, dass der Halteabstand zwischen dem zweiten Halteabschnitt und dem sich in Arbeitsposition befindenden ersten Halteabschnitt geringer ist, als der Halteabstand zwischen dem zweiten Halteabschnitt und dem sich in Stauposition befindenden ersten Halteabschnitt.

Diese Ausgestaltung einer Türvorrichtung mit einer ersten, teilweise beweglichen Haltevorrichtung an einem ersten Türsäulenbereich und einer zweiten Haltevorrichtung an einem zweiten Türsäulenbereich ermöglicht erstmalig, unterschiedliche Zugangsmethoden in das Personentransportfahrzeug darzustellen. Zum einen ist bei geöffneten Türblättern ein Zugang für Fahrgäste über die gesamte Türweite ermöglicht, wobei ein solcher Zugang dabei über einen Bahnsteig oder spezielle Zugangstreppen erfolgt. Zum anderen wird entsprechend geeigneten Personen ermöglicht, von einem tieferen Ausgangsniveau, beispielsweise von einem Bodenniveau einer Schienenoberkante, von Schienen oder eines Gleisbetts, in das Personentransportfahrzeug hineinzusteigen, insbesondere mithilfe einer Kletter-ähnlichen Zugangstechnik. Dazu ist der verringerte Halteabstand insbesondere kleiner als die Türweite gewählt, sodass eine entsprechend geeignete Person gleichzeitig mit einer ersten Hand, zum Beispiel mit der rechten Hand, den ersten Halteabschnitt, zum Beispiel den rechten Halteabschnitt, und mit einer zweiten Hand, zum Beispiel mit der linken Hand, den zweiten Halteabschnitt zum Beispiel den linken Halteabschnitt, greifen kann.

Eine geeignete Person weist beispielsweise eine Körpergröße von mindestens 1, 60 m auf.

Weiterhin erfolgt die Ausgestaltung des ersten und des zweiten Halteabschnitts in Vertikalrichtung derart, sodass die geeignete Person, wenn sie entweder auf Höhe der Schienenoberkante oder sogar maximal 20 cm darunter auf dem Umgebungsboden neben dem Personentransportfahrzeug steht, in der Lage ist, einen unteren Teil der Halteabschnitte mit jeweils einer Hand zu greifen. Beispielsweise reicht dazu der als Haltestange ausgebildete erste Halteabschnitt in Arbeitsposition bis zum Boden des Personentransportfahrzeugs, und/oder wobei der zweite Halteabschnitt Haltestangenähnlich gestaltet ist und sich im Wesentlichen bis zum Boden erstreckt.

Im Zusammenspiel wird erreicht, dass das Personentransportfahrzeug auch ohne separate Zugangsvorrichtung, beispielsweise wenn das Personentransportfahrzeug nicht im Bereich eines Bahnsteigs oder einer Zugangsplattform abgestellt ist, durch die Türvorrichtung bestiegen werden kann.

Die Anordnung und Ausgestaltung der ersten Haltevorrichtung in der Stauposition ist so gewählt, dass die geeignete Person auch in der Lage ist, den ersten Halteabschnitt aus der Stauposition in die Arbeitsposition zu bewegen, wenn die geeignete Person auf dem Umgebungsboden neben dem Personentransportfahrzeug steht. Dazu greift die geeignete Person von außen durch die geöffnete Türöffnung hindurch einen Bodenbereich des ersten Halteabschnitts und zieht diesen zumindest teilweise in Horizontalrichtung, bevorzugt in oder parallel zur Türöffnungsebene, aus der Stauposition in die Arbeitsposition. Entsprechend erfolgt der Positionswechsel mittels manuellem Ausziehen und/oder Ausklappen der ersten Haltevorrichtung direkt durch die geöffnete Türöffnung hindurch.

Weiterhin kann die erste Haltevorrichtung derart im oder am ersten Türsäulenbereich vorgesehen und gelagert sein, sodass diese stets Wetter geschützt in einem Innenraum des Personentransportfahrzeugs positioniert ist.

Gemäß einer Ausführungsform unterscheidet sich die Arbeitsposition des ersten Halteabschnitts von der Stauposition dadurch, dass sich in Arbeitsposition zwischen dem ersten Halteabschnitt und dem ersten Türsäulenbereich und/oder zwischen dem ersten Halteabschnitt und einer Innenverkleidung des Wagenkastens ein Horizontalabstand von mindestens 150 mm, insbesondere mindestens 250 mm, bevorzugt mindestens 350 mm, und/oder maximal 600 mm, insbesondere maximal 500 mm, bevorzugt maximal 450 mm, einstellt. Entsprechend verringert sich der Halteabstand zwischen dem ersten und dem zweiten Halteabschnitt um die angegebenen Maße, wenn der erste Halteabschnitt aus der Stauposition in die Arbeitsposition gebracht wird.

Insbesondere beträgt der Halteabstand des sich in der Arbeitsposition befindlichen ersten Halteabschnitt von dem zweiten Halteabschnitt in Horizontalrichtung mindestens 600 mm, insbesondere mindestens 700 mm, bevorzugt mindestens 800 mm, und/oder maximal 1100 mm, insbesondere maximal 1000 mm, bevorzugt maximal 900 mm.

Weiterhin kann die Türweite der Türvorrichtung mindestens 900 mm, insbesondere mindestens 1100 mm, bevorzugt mindestens 1300 mm, und/oder maximal 1800 mm, insbesondere maximal 1600 mm, bevorzugt maximal 1500 mm, betragen. Im Zusammenspiel dieser Ausführungsformen wird eine effektive Verkleinerung des Halteabstands unter die Türweite erreicht, sodass der geeigneten Person ein ergonomisches Betreten oder Besteigen des Personentransportfahrzeugs ermöglicht wird. Weiterhin wird im normalen Betriebseinsatz des Personentransportfahrzeugs eine ergonomisches Ein- und Aussteigen für Fahrgäste über die gesamte Türweite der Türvorrichtung ermöglicht, indem der erste Halteabschnitt in der Stauposition gelagert ist, und somit die Türöffnung nicht dadurch obstruiert ist.

Gemäß einer besonders vorteilhaften Ausführungsform ist in dem ersten Türsäulenbereich eine Aufnahme für die erste Haltevorrichtung vorgesehen, wobei der Lagerabschnitt zumindest teilweise innerhalb dieser Aufnahme angeordnet sein kann. Bei einer entsprechenden Ausgestaltung der Aufnahme und des Lagerabschnitt kann die erste Haltevorrichtung in Stauposition vollständig innerhalb der Aufnahme aufgenommen, insbesondere darin versenkt, werden. Auf diese Weise weist die Türöffnung eine maximale Größe aus und ist nicht durch die erste Haltevorrichtung in Teilen blockiert, wenn sich die erste Haltevorrichtung in der Stauposition befindet. Dies ermöglicht die Anordnung der ersten Haltevorrichtung auch bei einem sehr geringen Platzangebot.

Weiterhin kann die erste Haltevorrichtung auf diese Weise vor Vandalismus geschützt werden, insbesondere indem die erste Haltevorrichtung und die Aufnahme geometrisch entsprechend aufeinander abgestimmt gestaltet sind: Beispielsweise können Oberflächen der Haltevorrichtung und der Aufnahme so konfiguriert sein, dass Dritten kein Ansatzpunkt für einen Krafteintrag gegeben wird, und so verhindert wird, dass die erste Haltevorrichtung aus der Aufnahme herausbewegt werden kann.

Der Positionswechsel aus der Stauposition in die Arbeitsposition des ersten Halteabschnitts kann durch unterschiedliche, alternative oder sich ergänzende Ausgestaltungsformen erreicht werden. Beispielsweise ist denkbar, die erste Haltevorrichtung als Translationsvorrichtung zu konzipieren, wobei der Stützabschnitt und der Lagerabschnitt als Führungsvorrichtung fungieren. Dabei kann der erste Halteabschnitt mittels einer Translationsbewegung, zum Beispiel durch ein Herausziehen oder Hereinschieben, aus der Stauposition in die Arbeitsposition und zurück bewegt werden. Die Führungseinrichtung kann beispielsweise durch ein Schienensystem dargestellt werden.

Zusätzlich oder alternativ dazu kann die erste Haltevorrichtung als Schwenkvorrichtung ausgebildet sein, sodass der erste Halteabschnitt zumindest teilweise mittels einer Schwenkbewegung aus der Stauposition in die Arbeitsposition - und zurück - geschwenkt werden kann. Eine solche Schwenkbewegung umfasst beispielsweise ein paralleles Verschieben um eine Drehachse, insbesondere indem eine Ausrichtung des ersten Halteabschnitts im Wesentlichen verändert wird, jedoch kann auch der gesamte Halteabschnitt, beispielsweise im Zuge einer Klappbewegung, um eine Drehachse geschwenkt werden, sodass in der Stauposition und in der Lagerposition eine Ausrichtung des ersten Halteabschnitts variiert.

Im Zuge einer speziellen Ausgestaltung wird angeführt, dass der Stützabschnitt mindestens einen Schenkel mit einem äußeren Ende und mit einem inneren Ende aufweist. Das äußere Ende ist dabei drehbar mit dem ersten Halteabschnitt, und das innere Ende drehbar mit dem Lagerabschnitt verbunden. Vorzugsweise sind die jeweiligen Drehachsen parallel zueinander ausgerichtet, sodass der Halteabschnitt über den Schenkel schwenk- und drehbar gegenüber dem Lagerabschnitt gelagert ist. Bei einer Bewegung aus der Stauposition in die Arbeitsposition rotiert der Schenkel um den Lagerabschnitt und ermöglicht somit eine zumindest teilweise translatorische Bewegung des ersten Halteabschnitts in der Horizontalrichtung. Insbesondere sind dazu die jeweiligen Drehachsen senkrecht zur Türöffnungsebene ausgerichtet, wodurch die Schwenkbewegung des ersten Halteabschnitts und die Rotationsbewegung des Schenkels parallel zur Türöffnungsebene erfolgt.

Gemäß einer Weiterbildung umfasst der Stützbereich zwei Schenkel mit jeweils einem inneren Ende zur Lagerung an dem Lagerabschnitt und einem äußeren Ende zur Lagerung des ersten Halteabschnitts. Über die Lagerung mittels der beiden Schenkel ist die Schwenkbewegung des ersten Halteabschnitts bezüglich des Lagerabschnitts kinematisch bestimmt. Insbesondere kann auf diese Weise eine reine Parallelverschiebung des ersten Halteabschnitts gegenüber dem Lagerabschnitt erreicht werden.

Gemäß einer weiteren vorteilhaften Ausgestaltung ist der Lagerabschnitt derart in dem ersten Türsäulenbereich vorgesehen, sodass die erste Haltevorrichtung durch eine Hoch-Schwenkbewegung, also eine in Vertikalrichtung von einem Boden des Personenfahrzeugs weg verlaufende Schwenkbewegung, aus der Arbeitsposition in die Stauposition gebracht werden kann. Insbesondere werden dabei beide Schenkel parallel zueinander hoch-geklappt, und der erste Halteabschnitt vollführt eine reine Parallelverschiebung gemäß der Kreisbögen der äußeren Enden beider Schenkel in den ersten Türsäulenbereich, insbesondere in die Aufnahme des ersten Türsäulenbereichs hinein. Die Bewegung des ersten Halteabschnitts aus der Stauposition in die Arbeitsposition erfolgt durch ein Herunter-schwenken, insbesondere bis ein Bodenbereich des ersten Halteabschnitts in Vertikalrichtung auf die Türschwelle oder auf einen Boden des Personentransportfahrzeugs aufsetzt. Dies führt zu einer besonders robusten, einfachen und ergonomisch günstig zu bedienenden Konzeption der ersten Haltevorrichtung.

Im Zuge einer weiteren Verbesserung wird vorgeschlagen, in der Türschwelle und/oder in einem Bereich des Bodens des Personentransportfahrzeugs eine Fixiereinrichtung vorzusehen. Diese ist geeignet mit einem Fixierelement des ersten Halteabschnitts befestigend zusammenzuwirken, wenn sich der erste Halteabschnitt in der Arbeitsposition befindet. Insbesondere ist das Fixierelement in einem Bodenbereich des ersten Halteabschnitts angeordnet, beispielsweise ausgestaltet als Stift oder Zylinder, der von der Fixiereinrichtung aufgenommen werden kann. Auf diese Weise wird eine feste, aber lösbare Verbindung zwischen dem ersten Halteabschnitt und dem Boden oder der Türschwelle hergestellt, sodass die erste Haltevorrichtung nun nicht mehr ausschließlich über den Abstützabschnitt im Lagerabschnitt, sondern auch über den Bodenbereich in der Fixiereinrichtung gegenüber dem Wagenkasten, insbesondere in Horizontalrichtung, gelagert ist.

Um die Fixiereinrichtung vor Schmutz und vor damit verbundenen Funktionseinschränkungen zu schützen, ist die Fixiereinrichtung bevorzugt mit einer Schutzvorrichtung ausgerüstet. Die Schutzvorrichtung kann als federbetätigter Verschluss ausgestaltet sein, der mithilfe einer Feder in einer geschlossenen Position gehalten wird, wenn das Fixierelement nicht in der Fixiereinrichtung aufgenommen ist.

Insbesondere wird die Verbindung zwischen dem ersten Halteabschnitt und der Fixiereinrichtung durch die geeignete Person hergestellt, nachdem der erste Halteabschnitt in die Arbeitsposition bewegt worden ist, und bevor die geeignete Person den ersten Halteabschnitt zum Festhalten in Anspruch nimmt.

Weiterhin wird offenbart, dass die Türvorrichtung eine Sperreinrichtung aufweist, mit deren Hilfe die erste Haltevorrichtung in der Stauposition verriegelt gehalten werden kann. Wird eine solche Sperreinrichtung ausschließlich für den Gebrauch durch autorisierte Personen spezifiziert, beispielsweise mithilfe eines Schlosses, so kann ein unautorisierter Gebrauch der ersten Haltevorrichtung effektiv verhindert werden. Insbesondere kann die Sperreinrichtung innerhalb der Aufnahme angeordnet sein, wobei ein Zugang dazu mittels eines Schlüssels in einem Bereich der Türschwelle oder des Bodens des Personentransportfahrzeugs ermöglicht wird.

Gemäß einer weiteren Ausgestaltungsform kann die Türvorrichtung mindestens eine Hilfsbetätigungseinrichtung zum Unterstützen eines Bewegungsablaufs der ersten Haltevorrichtung aufweisen. Die Hilfsbetätigungseinrichtung kann beispielsweise derart zwischen erster Haltevorrichtung und erstem Türsäulenbereich angeordnet sein, sodass die Bewegung aus der Stauposition in die Arbeitsposition, gegebenenfalls nach Initiierung und/oder Entriegelung der ersten Haltevorrichtung, selbstständig vonstattengehen kann. Beispielsweise kann die Hilfsbetätigungseinrichtung als Gasdruckfeder ausgebildet sein.

Zusätzlich oder alternativ dazu kann eine Hilfsbetätigungseinrichtung so vorgesehen sein, dass ein Zurückbewegen der ersten Haltevorrichtung aus der Arbeitsposition in die Stauposition unterstützt wird, beispielsweise durch Ausgestaltung als Federelement.

Weiterhin kann die Haltevorrichtung derart konfiguriert sein, der Abstützabschnitt derart ausgebildet sein, und/oder die Fixiereinrichtung und das Fixierelement derart ausgebildet sein, sodass der erste Halteabschnitt mit einer dauerhaften Last in Horizontalrichtung, insbesondere senkrecht zur Türebene, von mindestens 1,5 kN, insbesondere mindestens 1,6 kN, bevorzugt mindestens 2 kN, belastbar ist, insbesondere ohne dabei eine Verschiebung in Horizontalrichtung, insbesondere senkrecht zur Türebene, von mehr als 15 mm zu vollführen. Durch diese entsprechend robuste, wackelfreie Bauweise wird eine sichere Nutzung der ersten Haltevorrichtung ermöglicht.

Zusätzlich zu zumindest einem der voran beschriebenen Ausführungsformen wird offenbart, dass die Türvorrichtung eine weitere Haltevorrichtung aufweist. Diese ist im Wesentlichen, oder mindestens hinsichtlich einer Funktion gleichwirkend oder identisch mit der ersten Haltevorrichtung ausgebildet. Entsprechend kann die weitere Haltevorrichtung einen weiteren Halteabschnitt aufweisen, der aus einer Stauposition, in welcher der weitere Halteabschnitt aus der Türöffnung herausbewegt ist, in eine Arbeitsposition, in welcher der weitere Halteabschnitt in die Türöffnung hineinbewegt ist, derart bewegbar an dem zweiten Türsäulenbereich angeordnet ist, sodass ein weiterer Halteabstand zwischen dem weiteren Halteabschnitt und dem Halteelement, in der Arbeitsposition kleiner als in der Stauposition ist. Insbesondere liegen somit zwei Haltevorrichtungen vor, deren Halteabschnitte jeweils eine Stauposition und eine Arbeitsposition einnehmen können.

Alle zuvor beschriebenen Ausführungen der ersten Haltevorrichtung und/oder des ersten Türsäulenbereichs, oder Kombinationen daraus, sind auf die weitere Haltevorrichtung und/oder auf den zweiten Türsäulenbereich übertragbar. Beispielsweise ist in oder am zweiten Türsäulenbereich ein weiterer Lagerabschnitt vorgesehen, und/oder der weitere Halteabschnitt weist einen sich zumindest teilweise in Horizontalrichtung erstreckbaren weiteren Stützabschnitt und einen am Stützabschnitt weiteren vorgesehenen Befestigungsabschnitt auf. Dabei können der weitere Stützabschnitt und/oder der weitere Befestigungsabschnitt, und/oder der weitere Lagerabschnitt derart ausgebildet und miteinander interagierend konfiguriert sein, sodass die weitere Haltevorrichtung in der Stauposition in unmittelbarer Nähe, teilweise oder vollständig innerhalb des zweiten Türsäulenbereichs und/oder im Wesentlichen außerhalb der Türöffnung angeordnet ist.

Alle im Zusammenhang mit dem ersten Halteabschnitt offenbarten Maße sind auch auf die zweite Haltevorrichtung und deren Halteabschnitt zu übertragen. Insbesondere trifft dies auf den weiteren Halteabstand und/oder auf einen weiteren Horizontalabstand zu.

Weiterhin wird ein Personentransportfahrzeug offenbart, insbesondere ausgebildet als Schienenfahrzeug. Gemäß einer Ausgestaltungsform handelt es sich bei dem Personentransportfahrzeug nicht um ein Nieder-Flurfahrzeug, insbesondere nicht um eine Straßenbahn oder Bus, deren Zugangsbereiche einen direkten Zugang vom Niveau einer Straße ermöglichen.

Das Personentransportfahrzeug weist mindestens einen sich in Längsrichtung erstreckenden Wagenkasten mit einem Boden auf, wobei der Wagenkasten über ein Räderwerk, insbesondere mittels Drehgestellen, rollbar auf einem Untergrund, insbesondere auf Schienen, gelagert ist.

Weiterhin weist das Personentransportfahrzeug eine Fahrerkabine oder einen Zugang zu einem weiteren Personentransportfahrzeug mit einer solchen Fahrerkabine auf. Dabei ist das Personentransportfahrzeug ohne einen separaten, direkten Zugang von einer Außenseite in die Fahrerkabine ausgestattet. Somit kann ein Fahrzeugführer - also eine zum Führen des Personentransportfahrzeugs geeignete Person - ausschließlich über eine der Türvorrichtungen für Fahrgäste und durch einen Innenraum des Personentransportfahrzeugs in eine der Fahrerkabinen gelangen. Es ist somit möglich, aus einem Passagierbereich des Personentransportfahrzeugs in eine Fahrerkabine des Personentransportfahrzeugs oder in ein weiteres Personentransportfahrzeug mit einer Fahrerkabine zu gelangen, ohne das Personentransportfahrzeug verlassen zu müssen.

Um auch von außen, ausgehend von einem Bodenniveau oder von einem Niveau eines Gleisbetts, in das Personentransportfahrzeug zu gelangen, ist das Personentransportfahrzeug mit mindestens einer Türvorrichtung nach einem der beschriebenen Ausführungsbeispiele oder nach einer Kombination mehrerer dieser Ausführungsbeispiele einer solchen Türvorrichtung ausgestattet.

Gemäß einer Ausführungsform sind das Räderwerk und der Wagenkasten des Personentransportfahrzeugs in ihrer Größe so konfiguriert, dass die Türschwelle der Türvorrichtung einen Bodenabstand in Vertikalrichtung von einem Umgebungsboden oder von einer Schienenoberkante der Schiene von mindestens 500 mm, insbesondere mindestens 600 mm, bevorzugt mindestens 700 mm, und/oder von maximal 1400 mm, insbesondere maximal 1300 mm, bevorzugt maximal 1000 mm aufweist.

Alternativ oder zusätzlich können das Räderwerk, der Wagenkasten und der erste Halteabschnitt so in ihren Ausdehnungen in Vertikalrichtung konfiguriert sein, sodass ein dem Boden des Personentransportfahrzeugs zugewandter Bodenbereich des ersten Halteabschnitts einen Erreichbarkeitsabstand von ein Umgebungsboden oder einer Schienenoberkante der Schiene von maximal 1350 mm, insbesondere maximal 1150 mm, bevorzugt maximal 1000 mm aufweist. Der Erreichbarkeitsabstand repräsentiert dabei die Möglichkeit der geeigneten Person, außerhalb des Fahrzeugs stehend den Bodenbereich des ersten Halteabschnitts greifen zu können, wobei sich der erste Halteabschnitt in der Arbeitsposition befindet.

Im Zuge einer Weiterentwicklung, weist das Personentransportfahrzeug einen Hilfstritt auf, der in Vertikalrichtung zwischen der Türschwelle und dem Umgebungsboden am Personentransportfahrzeug befestigt angeordnet ist. Dieser Hilfstritt dient dazu, der geeigneten Person das Einsteigen in das Personentransportfahrzeug zu erleichtern. Bei Benutzung des Hilfstritts hält sich die geeignete Person gleichzeitig an dem ersten Halteabschnitt und einem zweiten Halteabschnitt fest und betritt mit einem Fuß den Hilfstritt.

Gemäß einer Ausgestaltungsform ist der Hilfstritt derart am Personentransportfahrzeug angeordnet, sodass eine Tritthöhe - ein vertikaler Abstand zwischen dem Umgebungsboden oder der Schienenoberkante zum Hilfstritt - maximal 900 mm, insbesondere maximal 700 mm, bevorzugt maximal 500 mm beträgt.

Zusätzlich oder alternativ kann ein Trittabstand - ein vertikaler Abstand zwischen Hilfstritt und der Türschwelle - maximal 700 mm, insbesondere maximal 550 mm, bevorzugt maximal 450 mm betragen.

Die vorstehend beschriebenen Ausführungsformen dienen zur Verdeutlichung einzelner Aspekte der Offenbarung, können jedoch in sinnhafter Weise miteinander kombiniert werden, wobei beispielsweise die Ausgestaltung der ersten Haltevorrichtung als Schwenkvorrichtung zusammen mit der Ausgestaltung als Translationsvorrichtung kombiniert werden kann, sodass der erste Halteabschnitt im Zuge einer Schwenk- und Translationsbewegung aus der Stauposition in die Arbeitsposition bewegt werden kann, und wobei alternativ oder zusätzlich eine Hilfsbetätigungseinrichtung vorgesehen sein kann.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen gleiche oder entsprechend ähnliche Teile. In den Figuren zeigt
Fig. 1 ein Schienenfahrzeug mit einer Türvorrichtung,
Fig. 2 eine perspektivische Teil-Schnittansicht auf eine Türvorrichtung eines Türbereichs des Schienenfahrzeugs gemäß Fig. 1,
Fig. 3 eine weitere perspektivische Teil-Schnittansicht auf einen ersten Türsäulenbereich der Türvorrichtung gemäß Fig. 2,
Fig. 4 eine perspektivische Ansicht auf eine Innenverkleidung des ersten Türsäulenbereichs, wobei sich der erste Halteabschnitt in einer Stauposition befindet,
Fig. 5 eine perspektivische Ansicht gemäß Fig. 4, wobei sich der erste Halteabschnitt in einer Zwischenposition nahe der Stauposition befindet,
Fig. 6 eine perspektivische Ansicht gemäß Fig. 4, wobei sich der erste Halteabschnitt in einer Zwischenposition nahe einer Arbeitsposition befindet, und
Fig. 7 eine perspektivische Ansicht gemäß Fig. 4, wobei sich der erste Halteabschnitt in der Arbeitsposition befindet.

### Ausführungsbeispiele

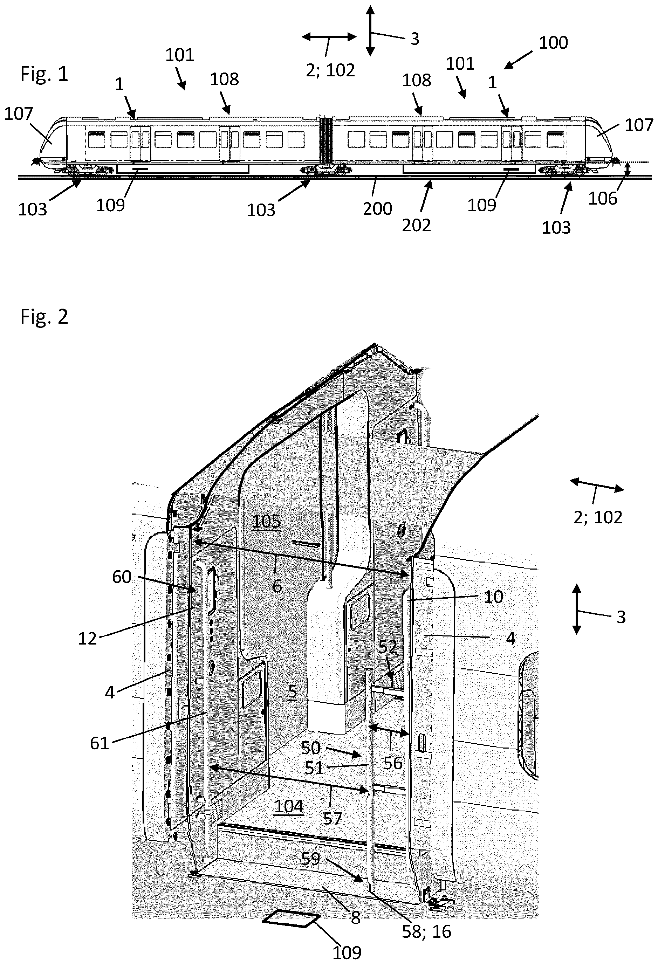

Zur Verdeutlichung des Gesamtverständnisses wird anhand Fig. 1 ein Schienenfahrzeug 100 dargestellt, wobei Wagenkästen 101 des Schienenfahrzeugs 100 mithilfe von Drehgestellen 103 in einer Vertikalrichtung 3 auf Schienen 200 abgestützt sind. Das gezeigte Schienenfahrzeug 100 setzt sich aus zwei als Waggons ausgeführten, aneinander gekoppelten Personentransportfahrzeugen zusammen, wobei in einer Längsrichtung 102 an den jeweils abgewandten Enden der Waggons jeweils eine Fahrerkabine 107 für einen Fahrzeugführer angeordnet sind. Eine in einer Ebene verlaufende Horizontalrichtung 2 erstreckt sich auch in Längsrichtung 102.

Die Fahrerkabinen 107 sind ohne einen separaten, direkten Zugang zu einer Außenseite des Schienenfahrzeugs 100 ausgebildet. Somit kann ein Fahrzeugführer - also eine zum Führen des Personentransportfahrzeugs geeignete Person - nur über eine der Türvorrichtungen 108, 1 durch einen Innenraum 105 des Schienenfahrzeugs 100 in eine der Fahrerkabinen 107 gelangen.

Der Zugang in einen Innenraum 105 der Wagenkästen 101 erfolgt ausschließlich über eine oder mehrere Türvorrichtungen 1, wobei im vorliegenden Beispiel ein jeder Waggon zumindest auf der gezeigten Waggonseite mit einer Türvorrichtung 1 und einer Türeinrichtung 108 ausgestattet ist.

Die Türeinrichtung 108 - diese ist nur aus Gründen der Vollständigkeit im Zuge dieser Offenbarung erwähnt und kann gegebenenfalls nicht zum Einsatz kommen - umfasst mindestens ein Türblatt zum Verschließen und Freigeben einer Türöffnung der Türeinrichtung 108.

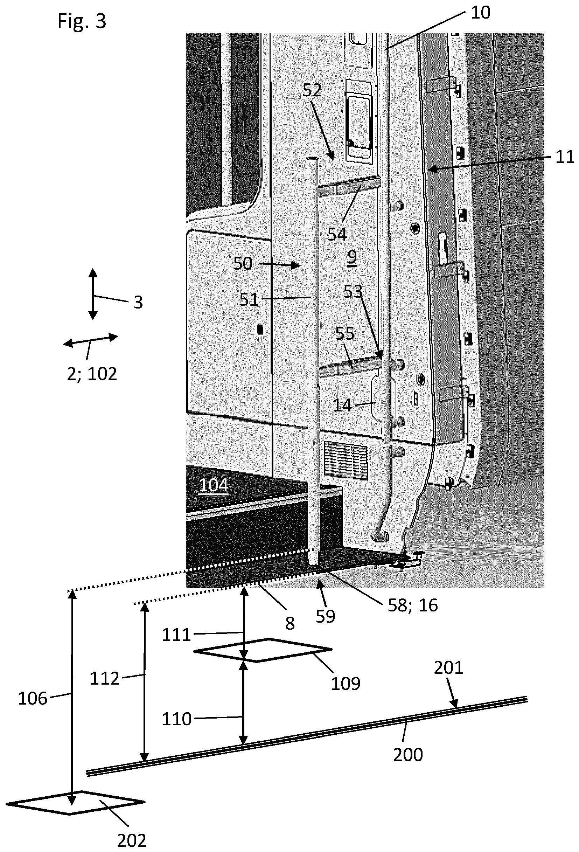

Hingegen erfüllt die Türvorrichtung 1 die im Kontext der vorliegenden Offenbarung gestellte Aufgabe und überwindet entsprechende Nachteile des Stands der Technik, was im Zusammenhang mit den Fig. 2 bis 7 näher beleuchtet wird.

In den Fig. 2 bis 7 ist zu erkennen, dass die Türvorrichtung 1 eine durch Türblätter 4 verschließbare Türöffnung 5 zum Ein- und Aussteigen für Fahrgäste in den und aus dem Innenraum 105 des jeweiligen Wagenkastens 101 bereitstellt. In Längsrichtung 102 ist die Türöffnung 5 durch einen ersten Türsäulenbereich 11 und einen zweiten Türsäulenbereich 12 begrenzt, wobei sich eine Türweite 6 zwischen den Türsäulenbereichen 11 und 12 und/oder zwischen den geöffneten Türblättern 4 ergibt. In Vertikalrichtung 3 ist die Türöffnung 5 an einer Oberseite durch einen nicht dargestellten Türstock und an einer Unterseite durch eine Türschwelle 8 limitiert, sodass die Türsäulenbereiche 11 und 12, der Türstock und die Türschwelle 8 bei funktioneller Betrachtung einen Türrahmen bilden.

Im vorliegenden, nicht limitierenden Ausführungsbeispiel weist ein Fahrzeugboden 104 ein anderes Höhenniveau als die stufig abgesenkte Türschwelle 8 auf. Denkbar ist jedoch auch, den Fahrzeugboden stufenlos durchgehend bis zur Türschwelle, gegebenenfalls mit Schrägen oder Rampen auszugestalten, um einen barrierefreien Zugang zu ermöglichen. Dabei kann der Boden 104 und die Türschwelle 8 bezüglich ihrer Position in Vertikalrichtung 3 zusammenfallen.

Aus Gründen der Übersichtlichkeit wird im Folgenden ausschließlich von der Türschwelle 8 gesprochen, wobei eine offenbarte technische Lehre bezüglich der Türschwelle 8, ebenso den Boden 104 betreffen kann, und folglich ein entsprechendes Ausführungsbeispiel im vorliegenden Offenbarungsgehalt inkludiert ist.

Der erste Türsäulenbereich 11 ist mit einer Innenverkleidung 9 ausgestaltet und trägt eine erste Haltevorrichtung 50. Weiterhin kann ein Halteelement 10 an der Innenverkleidung 9 und damit an dem ersten Türsäulenbereich 11 an montiert sein. Dieses dient dazu, ein- und aussteigenden Fahrgästen einen physischen Griff zum Festhalten zur Verfügung zu stellen.

Der Türsäulenbereich 11 und die Innenverkleidung 10 sind fest mit dem Wagenkasten 101 des Schienenfahrzeugs 100 verbunden. Denkbar ist auch, dass der Türsäulenbereich 11 und die Innenverkleidung 10 integral als ein Bauteil, und/oder integral mit einer Struktur des Wagenkastens 101 ausgebildet sind.

Die erste Haltevorrichtung 50 lässt sich in einen ersten Halteabschnitt 51, einen Stützabschnitt 52 und einen Befestigungsabschnitt 53 untergliedern. Dabei wird der erste Halteabschnitt 51, beispielsweise ausgeführt als Haltestange, von dem Abstützabschnitt 52 getragen, wobei dieser in einem Lagerabschnitt 13 in dem Türsäulenbereich 11 beweglich aufgenommen ist.

Der Stützabschnitt 52 setzt sich in diesem Ausführungsbeispiel aus einem oberen Schenkel 54 und einem unteren Schenkel 55 zusammen, wobei jeweils an einem dem ersten Halteabschnitt 51 zugewandten Schenkelende eine Drehverbindung mit dem ersten Halteabschnitt 51 vorgesehen ist, und wobei jeweils an einem dem Lagerabschnitt 13 zugewandten Schenkelende eine Drehverbindung mit dem Lagerabschnitt 13 vorgesehen ist.

Indem die Rotationsachsen der Drehverbindungen parallel zueinander, und insbesondere senkrecht zur Türebene, verlaufen, und indem die Längen der Schenkel und die Abstände der Drehverbindungen entsprechend gewählt sind, wird im Zuge einer Schwenkbewegung eine Parallelverschiebung des ersten Halteabschnitts 51 weg von dem ersten Türsäulenbereich 11 in die Türöffnung 5 hinein ermöglicht. So wird bei diesem vorliegenden Ausführungsbeispiel erreicht, dass der erste Halteabschnitt 51 eine Stauposition und eine Arbeitsposition einnehmen kann.

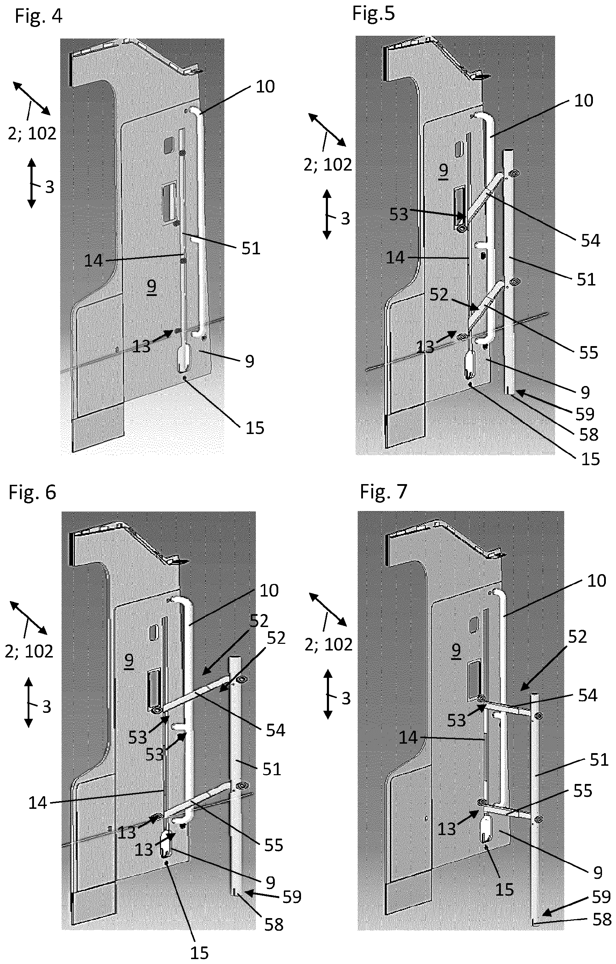

In der Fig. 2, 3 und 7 befindet sich der erste Halteabschnitt 51 in der Arbeitsposition und ragt in Horizontalrichtung 2, insbesondere in Längsrichtung 102 mit einem Horizontalabstand 56 in die Türöffnung 5 hinein. Mithilfe Fig. 5 wird die Stauposition verdeutlicht, wobei der erste Halteabschnitt 51, und insbesondere die gesamte Haltevorrichtung 50 mit Stützabschnitt 52 und Befestigungsabschnitt 53 vollständig, in einer Aufnahme 14 im der Innenverkleidung 9 versenkt angeordnet sind.

Aus Fig. 2 wird ersichtlich, dass an dem zweiten Türsäulenbereich 12 - in Längsrichtung 102 gegenüberliegend dem ersten Türsäulenbereich 11 - eine zweite Haltevorrichtung 60 mit einem zweiten Halteabschnitt 61 vorgesehen ist, welche insbesondere in Längsrichtung 102 der ersten Haltevorrichtung 50, dem ersten Halteabschnitt 51, und insbesondere dem Halteelement 10 gegenüber angeordnet ist.

Gemäß dem vorliegenden Ausführungsbeispiel, jedoch nicht beschränkt darauf, ist die zweite Haltevorrichtung 60 feststehend gestaltet, wobei insbesondere der zweite Halteabschnitt 61 fest an einem Wandpaneel oder an einer Struktur des Wagenkastens 101 befestigt ist.

Während eines normalen Betriebs des Personentransportfahrzeugs, d. h. wenn das als Schienenfahrzeug 100 ausgebildet Personentransportfahrzeug zum Transport von Fahrgästen verwendet wird, so dient zumindest der zweite Halteabschnitt 61, und optional auch das Halteelement 10, dazu, ein- und aussteigenden Fahrgästen einen physischen Griff zum Festhalten zur Verfügung zu stellen. Die erste Haltevorrichtung 51 befindet sich dabei in der Stauposition, sodass die Türöffnung 5 über ihre gesamte Türweite 6 von Fahrgästen vollständig genutzt werden kann.

In dem Fall, dass das Schienenfahrzeug 100 geparkt ist und sich auf einem Gleis ohne Bahnsteig oder Einstiegstreppe befindet, so kann es für eine geeignete Person problematisch sein, in das Schienenfahrzeug 100 zu gelangen, insbesondere da ein relevanter Bodenabstand 106 zwischen einem Umgebungsboden 202 und der Türschwelle 8, überwunden werden muss. Der Umgebungsboden 202 kann, bei einer Ausführung des Personentransportfahrzeugs als Schienenfahrzeug 100, beispielsweise ein Gleisbett sein.

Insbesondere können das Räderwerk und der Wagenkasten 101 so konstruiert sein, dass die Türschwelle 8 oder der Boden 104 einen Bodenabstand 106 in Vertikalrichtung 3 vom Umgebungsboden 202 von mindestens 500 mm, insbesondere mindestens 600 mm, bevorzugt mindestens 700 mm, und/oder von maximal 1400 mm, insbesondere maximal 1300 mm, bevorzugt maximal 1000 mm aufweist.

Wenn nun der Fahrzeugführer oder eine sonstige geeignete Person in den Innenraum 105 des Schienenfahrzeugs 101 gelangen will, so tritt er an das geparkte Schienenfahrzeug 100 heran und öffnet die Türvorrichtung 1, sodass die gesamte Türöffnung 5 freigegeben ist.

In einem nächsten Schritt greift die geeignete Person an einen Bodenbereich 59 des sich in der Stauposition befindenden ersten Halteabschnitts 51 und schwenkt diesen gemäß Fig. 4 bis Fig. 7 aus der Stauposition in die Arbeitsposition. Dadurch vollführt der erste Halteabschnitt 51 eine Translations- und/oder Schwenkbewegung (Fig. 5, Fig. 6) aus einer Aufnahme 14 von dem ersten Türsäulenbereich 11 heraus und in die Türöffnung 5 hinein, solange bis der Bodenbereich 59 des ersten Halteabschnitt 51 auf die Türschwelle 8 auftrifft.

Im Fall dass eine Sperreinrichtung 15 vorgesehen ist, muss die geeignete Person diese Sperreinrichtung 15 zuerst entriegeln. Erst dann kann der erste Halteabschnitt 51 und/oder die erste Haltevorrichtung 50 aus der Aufnahme 15 herausbewegt werden, sodass eine Translations- und/oder Schwenkbewegung der ersten Haltevorrichtung 50 ausgeführt werden kann.

Weiterhin befindet sich auf der Türschwelle 8 eine in Fixiereinrichtung 16 zum Herstellen einer festen aber lösbaren Verbindung zwischen dem ersten Halteabschnitt 51 und der Türschwelle 8. Dazu ist der Bodenbereich 59 mit einem Fixierelement 58 ausgestattet, welches in die Fixiereinrichtung 16 eingreifen kann, sodass der erste Halteabschnitt 51 zumindest in Horizontalrichtung 2, bevorzugt in allen Richtungen in der Fixiereinrichtung 16 festgelegt ist.

Befindet sich nun der erste Halteabschnitt 51 in der Arbeitsposition, so stellt sich zwischen dem ersten Halteabschnitt 51 und dem zweiten Halteabschnitt 61 ein Halteabstand 57 ein, welcher geringer als die Türweite 6 ausfällt. Insbesondere indem der erste Halteabschnitt 51 in der Arbeitsposition mit einem Horizontalabstand 56 von mindestens 150 mm, insbesondere mindestens 250 mm, bevorzugt mindestens 350 mm, und/oder maximal 600 mm, insbesondere maximal 500 mm, bevorzugt maximal 450 mm, in Längsrichtung 102 bzw. in Horizontalrichtung 2 in die Türöffnung 5 hineinragt, so verringert sich der Halteabstand 57 zwischen dem ersten Halteabschnitt 51 und dem zweiten Halteabschnitt 61 entsprechend. Beispielsweise führt dies dazu, dass der Halteabstand 57 in Horizontalrichtung 2 mindestens 600 mm, insbesondere mindestens 700 mm, bevorzugt mindestens 800 mm, und/oder maximal 1100 mm, insbesondere maximal 1000 mm, bevorzugt maximal 900 mm beträgt.

Auf diese Weise wird einer geeigneten Person oder dem Fahrzeugführer ermöglicht, sich beidseitig an dem ersten Halteabschnitt 51 und an dem zweiten Halteabschnitt 61 festzuhalten und durch die Türöffnung 5 in den Innenraum 105 zu gelangen.

Eine weitere Verbesserung der Ergonomie beim Hineingelangen der geeigneten Person in das Schienenfahrzeug 100 ergibt sich dadurch, dass an einer Außenseite des Schienenfahrzeugs 100 ein Hilfstritt 109 fest vorgesehen wird. Der Hilfstritt 109 befindet sich dabei so in Vertikalrichtung 3 zwischen der Türschwelle 8 und dem Umgebungsboden 202, sodass eine Tritthöhe 110 zwischen dem Umgebungsboden 202 oder der Schienenoberkante 201 zum Hilfstritt 109 in Vertikalrichtung 3 maximal 900 mm, insbesondere maximal 700 mm, bevorzugt maximal 500 mm beträgt. Weiterhin kann die Anordnung des Hilfstritts 109 so gewählt werden, dass ein Trittabstand 111 in Vertikalrichtung 3 zwischen Hilfstritt 109 und der Türschwelle 8 maximal 700 mm, insbesondere maximal 550 mm, bevorzugt maximal 450 mm beträgt. Auf diese Weise fungiert der Hilfstritt 109 im Zusammenspiel mit dem ersten Halteabschnitt 51 in Arbeitsposition und dem zweiten Halteabschnitt 61 als Leiterähnliche Eintrittshilfe.

Wenngleich hierin spezifische Ausführungsformen dargestellt und beschrieben worden sind, liegt es im Rahmen der vorliegenden Erfindung, die gezeigten Ausführungsformen geeignet zu modifizieren, beispielsweise indem die erste Haltevorrichtung 50 als Translationsvorrichtung und/oder keine oder eine andere Fixiereinrichtung vorgesehen wird, und/oder dass Teile der voranstehenden Offenbarung nicht in einem Schienenfahrzeug, sondern in einem Bus Anwendung finden.

### Bezugszeichenliste

- 1: Türvorrichtung
- 2: Horizontalrichtung
- 3: Vertikalrichtung
- 4: Türblatt
- 5: Türöffnung
- 6: Türweite
- 8: Türschwelle
- 9: Innenverkleidung
- 10: Halteelement
- 11: Erster Türsäulenbereich
- 12: Zweiter Türsäulenbereich
- 13: Lagerabschnitt
- 14: Aufnahme
- 15: Sperreinrichtung
- 16: Fixiereinrichtung
- 50: Erste Haltevorrichtung
- 51: Erster Halteabschnitt
- 52: Stützabschnitt
- 53: Befestigungsabschnitt
- 54: obere Schenkel
- 55: unterer Schenkel
- 56: Horizontalabstand
- 57: Halteabstand
- 58: Fixierelement
- 59: Bodenbereich
- 60: Zweite Haltevorrichtung
- 61: Zweiter Halteabschnitt
- 100: Schienenfahrzeug
- 101: Wagenkasten
- 102: Längsrichtung
- 103: Drehgestell
- 104: Boden
- 105: Innenraum
- 106: Bodenabstand
- 107: Fahrerkabine
- 108: Türeinrichtung
- 109: Hilfstritt
- 110: Tritthöhe
- 111: Trittabstand
- 112: Erreichbarkeitsabstand
- 200: Schienen
- 201: Schienenoberkante
- 202: Umgebungsboden

## Patentansprüche

1. Türvorrichtung (1) für einen Wagenkasten (102) eines Personentransportfahrzeugs des öffentlichen Personenverkehrs, insbesondere eines Schienenfahrzeugs (100), aufweisend
- eine Türöffnung (5) mit einem ersten Türsäulenbereich (11) und einem zweiten Türsäulenbereich (12), einer sich in einer Horizontalrichtung (2) erstreckenden Türweite (6) und mit einer Türschwelle (8),
- eine an dem ersten Türsäulenbereich (11) angeordnete erste Haltevorrichtung (50) mit einem ersten Halteabschnitt (51), und
- eine an dem zweiten Türsäulenbereich (12) angeordnete zweite Haltevorrichtung (61) mit einem zweiten Halteabschnitt (61),
- **dadurch gekennzeichnet, dass** der erste Halteabschnitt (51) von einer Stauposition, in welcher der erste Halteabschnitt (51) aus der Türöffnung (5) herausbewegt ist, in eine Arbeitsposition, in welcher der erste Halteabschnitt (51) in die Türöffnung (5) hineinbewegt ist, derart bewegbar an dem ersten Türsäulenbereich (11) angeordnet ist, sodass ein Halteabstand (57) zwischen dem erstem Halteabschnitt (51) und zweitem Halteabschnitt (61) in der Arbeitsposition kleiner als in der Stauposition ist.

2. Türvorrichtung (1) nach Anspruch 1, aufweisend einen in oder am ersten Türsäulenbereich (11) vorgesehenen Lagerabschnitt (13) zum Abstützen der ersten Haltevorrichtung (50),
- wobei die Haltevorrichtung (50) einen sich zumindest teilweise in Horizontalrichtung (2) erstreckbaren Stützabschnitt (52) und einen am Stützabschnitt (52) vorgesehenen Befestigungsabschnitt (53) aufweist, und
- wobei der Stützabschnitt (52) und/oder der Befestigungsabschnitt (53), und/oder der Lagerabschnitt (13) derart ausgebildet und miteinander interagierend konfiguriert sind, sodass die Haltevorrichtung (50) in der Stauposition in unmittelbarer Nähe, teilweise oder vollständig innerhalb des ersten Türsäulenbereichs (11) und/oder im Wesentlichen außerhalb der Türöffnung (5) angeordnet ist.

3. Türvorrichtung (1) nach Anspruch 1 oder 2, wobei die Haltevorrichtung (50) derart konfiguriert ist, und insbesondere der Lagerabschnitt (13) derart ausgebildet ist, sodass der Halteabschnitt (51) beim Bewegen des Halteabschnitts (51) aus der Stauposition in die Arbeitsposition zumindest teilweise eine Bewegung in Horizontalrichtung (2), insbesondere teilweise parallel zu einer Türöffnungsebene der Türöffnung (5), bevorzugt ausschließlich parallel zur Türöffnungsebene, vollführt.

4. Türvorrichtung (1) nach einem der voranstehenden Ansprüche, wobei die Haltevorrichtung (50) derart konfiguriert ist, und insbesondere der Lagerabschnitt (13) derart ausgebildet ist, sodass der erste Halteabschnitt (51) in Arbeitsposition einen Horizontalabstand (56) von dem ersten Türsäulenbereich (11), insbesondere von einer Innenverkleidung des ersten Türsäulenbereichs (11), von mindestens 150 mm, insbesondere mindestens 250 mm, bevorzugt mindestens 350 mm, und/oder maximal 600 mm, insbesondere maximal 500 mm, bevorzugt maximal 450 mm, aufweist.

5. Türvorrichtung (1) nach einem der voranstehenden Ansprüche, wobei die erste Haltevorrichtung (50) derart konfiguriert ist, und insbesondere der Lagerabschnitt (13) derart ausgebildet ist, und wobei die zweite Haltevorrichtung (60) derart an dem zweiten Türsäulenbereich (12) angeordnet ist,
- sodass der erste Halteabschnitt (51) in der Arbeitsposition einen Halteabstand (57) von dem zweiten Halteabschnitt (61) in Horizontalrichtung (2) von mindestens 600 mm, insbesondere mindestens 700 mm, bevorzugt mindestens 800 mm, und/oder maximal 1100 mm, insbesondere maximal 1000 mm, bevorzugt maximal 900 mm, aufweist, und/oder
- wobei die Türweite (6) mindestens 900 mm, insbesondere mindestens 1100 mm, bevorzugt mindestens 1300 mm, und/oder maximal 1800 mm, insbesondere maximal 1600 mm, bevorzugt maximal 1500 mm, beträgt.

6. Türvorrichtung (1) nach einem der voranstehenden Ansprüche, wobei die erste Haltevorrichtung (50) derart konfiguriert ist, und insbesondere der Lagerabschnitt (13) derart ausgebildet ist, sodass die erste Haltevorrichtung (50) vollständig in einer Aufnahme (14) des ersten Türsäulenbereichs (11) versenkbar ist.

7. Türvorrichtung (1) nach einem der voranstehenden Ansprüche,
- wobei die erste Haltevorrichtung (50) derart als Schwenkvorrichtung ausgebildet ist, und der Lagerabschnitt (13) mit einer Drehbefestigung derart ausgebildet ist, sodass der erste Halteabschnitt (51) im Zuge einer Schwenkbewegung aus der Stauposition in die Arbeitsposition geschwenkt werden kann, und/oder
- wobei die erste Haltevorrichtung derart als Translationsvorrichtung ausgebildet ist, und der Lagerabschnitt mit einer Führungseinrichtung derart ausgebildet ist, sodass der erste Halteabschnitt im Zuge einer Translationsbewegung aus der Stauposition in die Arbeitsposition verschoben werden kann.

8. Türvorrichtung (1) nach einem der voranstehenden Ansprüche, wobei der Stützabschnitt (52) mindestens einen Schenkel (54, 55) aufweist, wobei der erste Halteabschnitt (51) mit einem äußeren Ende des Schenkels (54, 55) drehbar verbunden ist, und wobei ein inneres Ende des Schenkels (54, 55) drehbar mit dem Lagerabschnitt (13) verbunden ist, insbesondere wobei entsprechende Drehachsen im Wesentlichen senkrecht zur Türebene (7) ausgerichtet sind, insbesondere wobei der Schenkel (54, 55) in der Stauposition im Wesentlichen parallel zum ersten Halteabschnitt (51) ausgerichtet ist.

9. Türvorrichtung (1) nach Anspruch 8, wobei der Stützabschnitt (52) mindestens, insbesondere genau, zwei Schenkel (54, 55) aufweist, insbesondere wobei der erste Halteabschnitt (51) über die Schenkel (54, 55) parallel verschwenkbar an dem Lagerabschnitt (13) angeordnet ist.

10. Türvorrichtung (1) nach einem der voranstehenden Ansprüche, wobei in der Türschwelle (8) oder in einem Bereich eines Bodens (104) des Personentransportfahrzeugs eine Fixiereinrichtung (16) derart vorgesehen ist, und wobei der erste Halteabschnitt (51) ein Fixierelement (58) derart aufweist, so dass der erste Halteabschnitt (51) in Arbeitsposition über das Fixierelement (58) fest aber lösbar an der Fixiereinrichtung (16) gelagert ist.

11. Türvorrichtung (1) nach einem der voranstehenden Ansprüche, wobei mindestens eine Hilfsbetätigungseinrichtung, insbesondere ausgebildet als Gasdruckfeder, zum Unterstützen eines Bewegungsablaufs der ersten Haltevorrichtung (50) aus der Stauposition in die Arbeitsposition und/oder aus der Arbeitsposition in die Stauposition vorgesehen ist, und/oder wobei eine Sperreinrichtung (15) zum Verriegeln der ersten Haltevorrichtung (50) in der Stauposition vorgesehen ist.

12. Türvorrichtung (1) nach einem der voranstehenden Ansprüche, aufweisend
- ein an dem ersten Türsäulenbereich (11) angeordnetes Halteelement (10), und
- eine an dem zweiten Türsäulenbereich (12) angeordnete weitere Haltevorrichtung mit einem weiteren Halteabschnitt, wobei diese gemäß der ersten Haltevorrichtung (50), insbesondere im Wesentlichen identisch oder gleichwirkend wie die erste Haltevorrichtung (50), ausgebildet ist, und wobei der weitere Halteabschnitt von einer Stauposition, in welcher der weitere Halteabschnitt aus der Türöffnung (5) herausbewegt ist, in eine Arbeitsposition, in welcher der weitere Halteabschnitt in die Türöffnung (5) hineinbewegt ist, derart bewegbar an dem zweiten Türsäulenbereich (12) angeordnet ist, sodass ein weiterer Halteabstand zwischen dem weiteren Halteabschnitt und dem Halteelement (10), in der Arbeitsposition kleiner als in der Stauposition ist, und insbesondere
- weiter aufweisend einen in oder am zweiten Türsäulenbereich (12) vorgesehenen weiteren Lagerabschnitt zum Abstützen der weiteren Haltevorrichtung, wobei die weitere Haltevorrichtung einen sich zumindest teilweise in Horizontalrichtung (2) erstreckbaren weiteren Stützabschnitt und einen am Stützabschnitt weiteren vorgesehenen Befestigungsabschnitt aufweist, und wobei der weitere Stützabschnitt und/oder der weitere Befestigungsabschnitt, und/oder der weitere Lagerabschnitt derart ausgebildet und miteinander interagierend konfiguriert sind, sodass die weitere Haltevorrichtung in der Stauposition in unmittelbarer Nähe, teilweise oder vollständig innerhalb des zweiten Türsäulenbereichs (12) und/oder im Wesentlichen außerhalb der Türöffnung (5) angeordnet ist.

13. Personentransportfahrzeug, insbesondere Schienenfahrzeug (100), aufweisend einen sich in einer Längsrichtung (101) erstreckenden Wagenkasten (102) mit einem Boden (104), wobei der Wagenkasten (102) über ein Räderwerk, insbesondere mittels Drehgestelle (103), auf einem Umgebungsboden (202), insbesondere auf Schienen (200), rollbar gelagert ist, wobei der Wagenkasten (102) mindestens einen direkten Zugang zu einer Fahrerkabine (107) durch den Wagenkasten (102) hindurch, und mindestens eine Türvorrichtung (1) nach einem der voranstehenden Ansprüche aufweist, insbesondere wobei kein separaten Zugang von einer Außenseite des Personentransportfahrzeugs in die Fahrerkabine (107) vorgesehen ist.

14. Personentransportfahrzeug nach Anspruch 13,
- wobei das Räderwerk und der Wagenkasten (102) derart ausgebildet sind, sodass die Türschwelle (8) der Türvorrichtung (1) einen Bodenabstand (106), insbesondere von einer Schienenoberkante (201) der Schiene (200), in Vertikalrichtung (3) von mindestens 500 mm, insbesondere mindestens 600 mm, bevorzugt mindestens 700 mm, und/oder von maximal 1400 mm, insbesondere maximal 1300 mm, bevorzugt maximal 1000 mm aufweist, und/oder
- wobei der erste Halteabschnitt (51), das Räderwerk, der Wagenkasten (102) derart ausgebildet sind, sodass ein dem Boden (104) zugewandter Bodenbereiche (59) des ersten Halteabschnitts (51) einen Erreichbarkeitsabstand (112) von einem Umgebungsboden (202) oder einer Schienenoberkante (201) der Schiene (200) von maximal 1350 mm, insbesondere maximal 1150 mm, bevorzugt maximal 1000 mm aufweist.

15. Personentransportfahrzeug nach Anspruch 13 oder 14, aufweisend derart einen zwischen Türschwelle (8) und Schienenoberkante (201) angeordneten Hilfstritt (109),
- sodass eine Tritthöhe (110) zwischen einer Schienenoberkante (201) der Schiene (200) und dem Hilfstritt (109) in Vertikalrichtung (3) maximal 900 mm, insbesondere maximal 700 mm, bevorzugt maximal 500 mm beträgt, und/oder
- sodass ein Trittabstand (111) zwischen dem Hilfstritt (109) und der Türschwelle (8) in Vertikalrichtung (3) maximal 700 mm, insbesondere maximal 550 mm, bevorzugt maximal 450 mm beträgt.

## Claims

1. A door device (1) for a car body (102) of a public passenger transport vehicle, in particular a rail vehicle (100), comprising
- a door opening (5) with a first door pillar region (11) and a second door pillar region (12), a door width (6) extending in a horizontal direction (2) and with a door sill (8),
- a first holding device (50) arranged on the first door pillar region (11) and having a first holding section (51), and
- a second holding device (61) arranged on the second door pillar region (12) and having a second holding section (61),
- **characterized in that** the first holding section (51) is arranged movably on the first door pillar region (11) from a stowed position, in which the first holding section (51) is moved out of the door opening (5), into a working position, in which the first holding section (51) is moved into the door opening (5), in such a way that a holding distance (57) between the first holding section (51) and second holding section (61) is smaller in the working position than in the stowed position.

2. The door device (1) according to claim 1, comprising a bearing section (13) provided in or on the first door pillar region (11) for supporting the first holding device (50),
- wherein the holding device (50) comprises a support section (52) extending at least partially in the horizontal direction (2) and a fastening section (53) provided on the support section (52), and
- wherein the support section (52) and/or the fastening section (53), and/or the bearing section (13) are formed and configured to interact with each other such that the holding device (50) is arranged in the stowed position in the immediate vicinity, partially or completely inside the first door pillar region (11) and/or substantially outside the door opening (5).

3. The door device (1) according to claim 1 or 2, wherein the holding device (50) is configured such, and in particular the bearing section (13) is formed such, that when the holding section (51) is moved from the stowed position into the working position, the holding section (51) at least partially performs a movement in the horizontal direction (2), in particular partially parallel to a door opening plane of the door opening (5), preferably exclusively parallel to the door opening plane.

4. The door device (1) according to any of the preceding claims, wherein the holding device (50) is configured such, and in particular the bearing section (13) is formed such, that the first holding section (51) in the working position has a horizontal distance (56) from the first door pillar region (11), in particular from an inner lining of the first door pillar region (11), of at least 150 mm, in particular at least 250 mm, preferably at least 350 mm, and/or at most 600 mm, in particular at most 500 mm, preferably at most 450 mm.

5. The door device (1) according to any of the preceding claims, wherein the first holding device (50) is configured such, and in particular the bearing section (13) is formed such, and wherein the second holding device (60) is arranged on the second door pillar region (12) such,
- that the first holding section (51) in the working position has a holding distance (57) from the second holding section (61) in the horizontal direction (2) of at least 600 mm, in particular at least 700 mm, preferably at least 800 mm, and/or at most 1100 mm, in particular at most 1000 mm, preferably at most 900 mm, and/or
- wherein the door width (6) is at least 900 mm, in particular at least 1100 mm, preferably at least 1300 mm, and/or at most 1800 mm, in particular at most 1600 mm, preferably at most 1500 mm.

6. The door device (1) according to any of the preceding claims, wherein the first holding device (50) is configured such, and in particular the bearing section (13) is formed such, that the first holding device (50) is completely retractable in a receptacle (14) of the first door pillar region (11).

7. The door device (1) according to any of the preceding claims,
- wherein the first holding device (50) is formed as a pivoting device, and the bearing section (13) is formed with a rotary fastening such that the first holding section (51) can be pivoted from the stowed position into the working position in the course of a pivoting movement, and/or
- wherein the first holding device is formed as a translation device, and the bearing section is formed with a guide device such that the first holding section can be displaced from the stowed position into the working position in the course of a translational movement.

8. The door device (1) according to any of the preceding claims, wherein the support section (52) comprises at least one leg (54, 55), wherein the first holding section (51) is rotatably connected to an outer end of the leg (54, 55), and wherein an inner end of the leg (54, 55) is rotatably connected to the bearing section (13), in particular wherein corresponding axes of rotation are oriented substantially perpendicular to the door plane (7), in particular wherein the leg (54, 55) is aligned substantially parallel to the first holding section (51) in the stowed position.

9. The door device (1) according to claim 8, wherein the support section (52) has at least, in particular exactly, two legs (54, 55), in particular wherein the first holding section (51) is arranged on the bearing section (13) so as to be pivotable in parallel via the legs (54, 55).

10. The door device (1) according to one of the preceding claims, wherein a fixing device (16) is provided in the door sill (8) or in a region of a floor (104) of the passenger transport vehicle such, and wherein the first holding section (51) has a fixing element (58) such, that the first holding section (51) is fixedly but releasably mounted on the fixing device (16) in the working position via the fixing element (58).

11. The door device (1) according to any of the preceding claims, wherein at least one auxiliary actuating device, in particular formed as a gas strut, is provided for supporting a movement sequence of the first holding device (50) from the stowed position into the working position and/or from the working position into the stowed position, and/or wherein a locking device (15) is provided for locking the first holding device (50) in the stowed position.

12. The door device (1) according to any of the preceding claims, comprising
- a holding element (10) being arranged at the first door pillar region (11), and
- a further holding device being arranged on the second door pillar region (12) and having a further holding section, wherein this is formed in accordance with the first holding device (50), in particular substantially identically or in the same way as the first holding device (50), and wherein the further holding section is arranged on the second door pillar region (12) so as to be movable from a stowed position, in which the further holding section is moved out of the door opening (5), into a working position, in which the further holding section is moved into the door opening (5), such that a further holding distance between the further holding section and the holding element (10) is smaller in the working position than in the stowed position, and in particular
- further comprising a further bearing section provided in or on the second door pillar region (12) for supporting the further holding device, wherein the further holding device comprises a further support section extending at least partially in the horizontal direction (2) and a further fastening section provided on the support section, and wherein the further support section and/or the further fastening section and/or the further bearing section are formed and configured to interact with one another such that the further holding device is arranged in the stowed position in the immediate vicinity, partially or completely inside the second door pillar region (12) and/or substantially outside the door opening (5).

13. A passenger transport vehicle, in particular a rail vehicle (100), comprising a car body (102) extending in a longitudinal direction (101) with a floor (104), wherein the car body (102) is rollably supported on a surrounding floor (202), in particular on rails (200), via a wheel arrangement, in particular by means of bogies (103), wherein the car body (102) has at least one direct access to a driver's cab (107) through the car body (102), and at least a single door device (1) according to any of the preceding claims, in particular wherein no separate access from an outside of the passenger transport vehicle into the driver's cab (107) is provided.

14. The passenger transport vehicle according to claim 13,
- wherein the wheel arrangement and the car body (102) are formed such that the door sill (8) of the door device (1) has a floor clearance (106), in particular from a top of rail (201) of the rail (200), in the vertical direction (3) of at least 500 mm, in particular at least 600 mm, preferably at least 700 mm, and/or of at most 1400 mm, in particular at most 1300 mm, preferably at most 1000 mm, and/or
- wherein the first holding section (51), the wheel arrangement and the car body (102) are formed such that a floor region (59) of the first holding section (51) facing the floor (104) has an accessibility distance (112) from a surrounding floor (202) or a top of rail (201) of the rail (200) of at most 1350 mm, in particular at most 1150 mm, preferably at most 1000 mm.

15. The passenger transport vehicle according to claim 13 or 14, comprising such an auxiliary step (109) arranged between the door sill (8) and the top of rail (201),
- so that a step height (110) between a top of rail (201) of the rail (200) and the auxiliary step (109) in the vertical direction (3) is at most 900 mm, in particular at most 700 mm, preferably at most 500 mm, and/or
- so that a step distance (111) between the auxiliary step (109) and the door sill (8) in the vertical direction (3) is at most 700 mm, in particular at most of 550 mm, preferably at most 450 mm.

## Revendications

1. Dispositif de porte (1) pour une caisse de voiture (102) d'un véhicule de transport de personnes du transport public de personnes, en particulier d'un véhicule ferroviaire (100), présentant
- une ouverture de porte (5) comportant une première zone de montant de porte (11) et une deuxième zone de montant de porte (12), une largeur de porte (6) s'étendant dans une direction horizontale (2), et comportant un seuil de porte (8),
- un premier dispositif de retenue (50) disposé au niveau de la première zone de montant de porte (11) et comportant une première section de retenue (51), et
- un second dispositif de retenue (61) disposé au niveau de la deuxième zone de montant de porte (12) et comportant une deuxième section de retenue (61),
- **caractérisé en ce que** la première section de retenue (51) est disposée au niveau de la première zone de montant de porte (11) de manière à pouvoir se déplacer d'une position de rangement, dans laquelle la première section de retenue (51) est déplacée hors de l'ouverture de porte (5), à une position de travail, dans laquelle la première section de retenue (51) est déplacée dans l'ouverture de porte (5), de telle sorte qu'une distance de retenue (57) entre la première section de retenue (51) et la deuxième section de retenue (61) est plus petite dans la position de travail que dans la position de rangement.

2. Dispositif de porte (1) selon la revendication 1, présentant une section de support (13) prévue dans la première zone de montant de porte (11) ou au niveau de celle-ci pour le soutien du premier dispositif de retenue (50),
- dans lequel le dispositif de retenue (50) présente une section de soutien (52) apte à s'étendre au moins partiellement dans la direction horizontale (2) et une section de montage (53) prévue au niveau de la section de soutien (52), et
- dans lequel la section de soutien (52) et/ou la section de montage (53), et/ou la section de support (13), sont réalisées et conçues de manière à interagir entre elles de telle sorte que le dispositif de retenue (50), dans la position de rangement, est disposé à proximité immédiate, partiellement ou complètement à l'intérieur de la première zone de montant de porte (11) et/ou sensiblement à l'extérieur de l'ouverture de porte (5).

3. Dispositif de porte (1) selon la revendication 1 ou 2, dans lequel le dispositif de retenue (50) est configuré, et en particulier la section de support (13) est réalisée, de telle sorte que la section de retenue (51), lors du déplacement de la section de retenue (51) de la position de rangement vers la position de travail, effectue au moins partiellement un déplacement dans la direction horizontale (2), en particulier partiellement parallèlement à un plan d'ouverture de porte de l'ouverture de porte (5), de préférence exclusivement parallèlement au plan d'ouverture de porte.

4. Dispositif de porte (1) selon l'une des revendications précédentes, dans lequel le dispositif de retenue (50) est conçu, et en particulier la section de support (13) est réalisée de telle sorte que la première section de retenue (51) présente, dans la position de travail, une distance horizontale (56) par rapport à la première zone de montant de porte (11), en particulier par rapport à un revêtement intérieur de la première zone de montant de porte (11), d'au moins 150 mm, en particulier d'au moins 250 mm, de préférence d'au moins 350 mm, et/ou d'au maximum 600 mm, en particulier d'au maximum 500 mm, de préférence d'au maximum 450 mm.

5. Dispositif de porte (1) selon l'une des revendications précédentes, dans lequel le premier dispositif de retenue (50) est conçu, et en particulier la section de support (13) est réalisée, et dans lequel le second dispositif de retenue (60) est disposé au niveau de la deuxième zone de montant de porte (12),
- de telle sorte que la première section de retenue (51) présente, dans la position de travail, une distance de retenue (57) par rapport à la deuxième section de retenue (61) dans la direction horizontale (2) d'au moins 600 mm, en particulier d'au moins 700 mm, de préférence d'au moins 800 mm, et/ou d'au maximum 1 100 mm, en particulier d'au maximum 1 000 mm, de préférence d'au maximum 900 mm, et/ou
- dans lequel la largeur de porte (6) est d'au moins 900 mm, en particulier d'au moins 1 100 mm, de préférence d'au moins 1 300 mm, et/ou d'au maximum 1 800 mm, en particulier d'au maximum 1 600 mm, de préférence d'au maximum 1 500 mm.

6. Dispositif de porte (1) selon l'une des revendications précédentes, dans lequel le premier dispositif de retenue (50) est conçu, et en particulier la section de support (13) est réalisée de telle sorte que le premier dispositif de retenue (50) peut être entièrement escamoté dans un logement (14) de la première zone de montant de porte (11).

7. Dispositif de porte (1) selon l'une des revendications précédentes,
- dans lequel le premier dispositif de retenue (50) est réalisé comme un dispositif pivotant, et la section de support (13) est réalisée avec un montage rotatif, de telle sorte que la première section de retenue (51) peut être pivotée de la position de rangement à la position de travail au cours d'un déplacement pivotant, et/ou
- dans lequel le premier dispositif de retenue est réalisé comme un dispositif de translation, et la section de support est réalisée avec un appareil de guidage, de telle sorte que la première section de retenue peut être décalée de la position de rangement à la position de travail au cours d'un déplacement translatoire.

8. Dispositif de porte (1) selon l'une des revendications précédentes, dans lequel la section de soutien (52) présente au moins une branche (54, 55), dans lequel la première section de retenue (51) est reliée de manière à pouvoir tourner à une extrémité extérieure de la branche (54, 55), et dans lequel une extrémité intérieure de la branche (54, 55) est reliée de manière à pouvoir tourner à la section de support (13), en particulier dans lequel des axes de rotation correspondants sont orientés sensiblement perpendiculairement au plan de porte (7), en particulier dans lequel la branche (54, 55) est orientée sensiblement parallèlement à la première section de retenue (51) dans la position de rangement.

9. Dispositif de porte (1) selon la revendication 8, dans lequel la section de soutien (52) présente au moins, en particulier exactement, deux branches (54, 55), en particulier dans lequel la première section de retenue (51) est disposée au niveau de la section de support (13) de manière à pouvoir pivoter parallèlement par l'intermédiaire des branches (54, 55).

10. Dispositif de porte (1) selon l'une des revendications précédentes, dans lequel un appareil de fixation (16) est prévu dans le seuil de porte (8) ou dans une zone d'un plancher (104) du véhicule de transport de personnes, et dans lequel la première section de retenue (51) présente un élément de fixation (58), de telle sorte que la première section de retenue (51), dans la position de travail, est supportée fixement mais de manière amovible sur l'appareil de fixation (16) par l'intermédiaire de l'élément de fixation (58).

11. Dispositif de porte (1) selon l'une des revendications précédentes, dans lequel au moins un appareil d'actionnement auxiliaire, en particulier réalisé comme un ressort à pression de gaz, est prévu pour assister un déroulement de déplacement du premier dispositif de retenue (50) de la position de rangement à la position de travail et/ou de la position de travail à la position de rangement, et/ou dans lequel un appareil de blocage (15) est prévu pour verrouiller le premier dispositif de retenue (50) dans la position de rangement.

12. Dispositif de porte (1) selon l'une des revendications précédentes, présentant
- un élément de retenue (10) disposé au niveau de la première zone de montant de porte (11), et
- un dispositif de retenue supplémentaire disposé au niveau de la deuxième zone de montant de porte (12) et comportant une section de retenue supplémentaire, dans lequel ledit dispositif de retenue supplémentaire est réalisé conformément au premier dispositif de retenue (50), en particulier de manière sensiblement identique ou de manière à avoir le même effet que le premier dispositif de retenue (50), et dans lequel la section de retenue supplémentaire est disposée au niveau de la deuxième zone de montant de porte (12) de manière à pouvoir se déplacer d'une position de rangement, dans laquelle la section de retenue supplémentaire est déplacée hors de l'ouverture de porte (5), à une position de travail, dans laquelle la section de retenue supplémentaire est déplacée dans l'ouverture de porte (5), de telle sorte qu'une distance de retenue supplémentaire entre la section de retenue supplémentaire et l'élément de retenue (10) est plus petite dans la position de travail que dans la position de rangement, et en particulier
- présentant en outre une section de support supplémentaire prévue dans la deuxième zone de montant de porte (12) ou au niveau de celle-ci pour le soutien du dispositif de retenue supplémentaire, dans lequel le dispositif de retenue supplémentaire présente une section de soutien supplémentaire pouvant s'étendre au moins partiellement dans la direction horizontale (2) et une section de montage supplémentaire prévue au niveau de la section de soutien, et dans lequel la section de soutien supplémentaire et/ou la section de montage supplémentaire, et/ou la section de support supplémentaire, sont réalisées et conçues de manière à interagir entre elles de telle sorte que le dispositif de retenue supplémentaire, dans la position de rangement, est disposé à proximité immédiate, partiellement ou complètement à l'intérieur de la deuxième zone de montant de porte (12) et/ou sensiblement à l'extérieur de l'ouverture de porte (5).

13. Véhicule de transport de personnes, en particulier véhicule ferroviaire (100), présentant une caisse de voiture (102) s'étendant dans une direction longitudinale (101) et comportant un plancher (104), dans lequel la caisse de voiture (102) est supportée de manière à pouvoir rouler sur un sol environnant (202), en particulier sur des rails (200), par l'intermédiaire d'un train de roues, en particulier au moyen de bogies (103), dans lequel la caisse de voiture (102) présente au moins un accès direct à une cabine de conducteur (107) à travers la caisse de voiture (102), et au moins un dispositif de porte (1) selon l'une des revendications précédentes, en particulier dans lequel aucun accès séparé à la cabine de conducteur (107) n'est prévu depuis un côté extérieur du véhicule de transport de personnes.

14. Véhicule de transport de personnes selon la revendication 13,
- dans lequel le train de roues et la caisse de voiture (102) sont réalisés de telle sorte que le seuil de porte (8) du dispositif de porte (1) présente une distance par rapport au sol (106), en particulier par rapport à un bord supérieur de rail (201) du rail (200), dans la direction verticale (3) d'au moins 500 mm, en particulier d'au moins 600 mm, de préférence d'au moins 700 mm, et/ou d'au maximum 1 400 mm, en particulier d'au maximum 1 300 mm, de préférence d'au maximum 1 000 mm, et/ou
- dans lequel la première section de retenue (51), le train de roues, la caisse de voiture (102) sont réalisés de telle sorte qu'une zone de plancher (59) de la première section de retenue (51), laquelle zone de plancher est tournée vers le plancher (104), présente une distance d'accessibilité (112) par rapport à un sol environnant (202) ou à un bord supérieur de rail (201) du rail (200) d'au maximum 1 350 mm, en particulier d'au maximum 1 150 mm, de préférence d'au maximum 1 000 mm.

15. Véhicule de transport de personnes selon la revendication 13 ou 14, présentant un marchepied auxiliaire (109) disposé entre le seuil de porte (8) et le bord supérieur de rail (201),
- de telle sorte qu'une hauteur de marchepied (110) entre un bord supérieur de rail (201) du rail (200) et le marchepied auxiliaire (109) dans la direction verticale (3) est d'au maximum 900 mm, en particulier d'au maximum 700 mm, de préférence d'au maximum 500 mm, et/ou
- de telle sorte qu'une distance de marchepied (111) entre le marchepied auxiliaire (109) et le seuil de porte (8) dans la direction verticale (3) est d'au maximum 700 mm, en particulier d'au maximum 550 mm, de préférence d'au maximum 450 mm.
